# EUROPÄISCHE PATENTSCHRIFT

(11) **EP 1 228 913 B1**
(45) Veröffentlichungstag und Bekanntmachung des Hinweises auf die Patenterteilung: **05.09.2007**
(21) Anmeldenummer: 02001737.2
(22) Anmeldetag: 25.01.2002
(51) Int. Cl.: B60J 7/14, B60J 7/20

(54) **Cabriolet-Fahrzeug mit einer relativbeweglichen Heckscheibe**
Convertible vehicle provided with relatively movable rear window
Véhicule convertible équipé avec une lunette arrière relativement amovible

(30) Priorität: 01.02.2001 DE 10104332
(43) Veröffentlichungstag der Anmeldung: 07.08.2002
(73) Patentinhaber: Wilhelm Karmann GmbH, 49084 Osnabrück (DE)
(72) Erfinder: Maass, Joachim, 49143 Bissendorf (DE)

(56) Entgegenhaltungen:
- DE-A- 19 912 358
- DE-C- 19 635 869
- DE-C- 19 706 397
- DE-C- 19 751 660
- DE-C- 19 805 477
- DE-C- 19 807 490
- DE-C- 19 912 355

## Beschreibung

Die Erfindung betrifft ein Cabriolet-Fahrzeug mit einem im rückwärtigen Fahrzeugbereich ablegbaren Dach, das eine Heckscheibe umfaßt, nach dem Oberbegriff des Anspruchs 1 sowie ein Fahrzeugdach nach dem Oberbegriff des Anspruchs 12.

Die DE 198 07 490 C1 zeigt ein Cabriolet-Fahrzeug mit einer Heckscheibe, die in geschlossener Stellung des Daches in einem Rahmenbereich eingefaßt und während der Ablage des Daches gegenüber diesem relativbeweglich ist, um somit in einer Packstellung die Einschränkung des Kofferraums durch das abgelegte Dach zu vermindern. Hierfür wird die Heckscheibe gegenüber dem Rahmenteil verschwenkt, und zwar derart, daß der untere Randbereich der Heckscheibe in Fahrtrichtung nach hinten und unten verlagert und der obere Randbereich der Heckscheibe entsprechend nach oben verlagert wird. Somit ist bei einem in gewendeter Orientierung abgelegten hinteren Dachteil, das mit seiner in geschlossener Stellung die Außenseite bildenden Fläche nach unten weist, durch die Aufwärtsverlagerung des oberen Randes der Heckscheibe die darunter verbleibende Höhe im Kofferraum vergrößert. Dieses kann etwa für einen vergrößerten Tank genutzt werden. Für das Einschieben von Gepäckstücken durch eine hintere Kofferraumöffnung steht jedoch nicht mehr Raum zur Verfügung, da der in Ablagestellung rückwärtige Rand des Daches seinen Horizontalabstand zum hinteren Kofferraumende hierdurch nicht verändert.

Aus der gattungsbildenden DE 199 12 355 C1 ist ein Fahrzeug mit einer relativbeweglichen Heckscheibe bekannt, bei dem bei geöffnetem und geschlossenem Dach die Relativlage zwischen der Heckscheibe (dort mit dem Bezugszeichen 5 versehen) und dem umgebenden Rahmen (dort mit dem Bezugszeichen 7 versehen) gleichartig ist. Während des Dachöffnens oder -schließens ist hingegen eine (Schwenk-) Bewegung der Heckscheibe 5 nach hinten aus dem Rahmen 7 heraus zur Überwindung von Hindernissen möglich, jedoch muß diese vor Erreichen der Ablagestellung rückgeführt und die Heckscheibe für die Packstellung wieder in den Rahmen eingeführt werden,

Somit ist dort eine herkömmliche Packstellung des geöffneten Dachs gezeigt. Das Einschieben von sperrigen Gepäckstücken durch eine hintere Kofferraumöffnung ist somit schwierig.

Der Erfindung liegt das Problem zugrunde, hier eine Verbesserung zu erreichen. Die Erfindung löst dieses Problem durch ein Cabriolet-Fahrzeug mit den Merkmalen des Anspruchs 1 sowie durch ein Fahrzeugdach mit den Merkmalen des Anspruchs 12. Vorteilhafte Ausgestaltungen ergeben sich aus den unselbständigen Ansprüchen 2 bis 11.

Durch die erfindungsgemäße Verlagerbarkeit der Heckscheibe gegenüber dem sie in geschlossener Stellung umgebenden Rahmenbereich des hinteren Dachteils in Fahrtrichtung nach vorne ist sichergestellt, daß die Heckscheibe in Packstellung von der rückwärtigen Kofferraumöffnung weiter entfernt liegt als ohne diese Verlagerbarkeit. Das Einbringen von Gepäckstücken durch die Kofferraumöffnung ist damit erleichtert. Der Kofferraum ist vergrößert. Dieses trifft sowohl bei einem in Packstellung mit seiner Außenseite nach unten liegenden hinteren Dachteil als auch insbesondere bei einem zwischen der Packstellung und der geschlossenen Stellung in gleicher Orientierung verbleibenden hinteren Dachteil zu.

Wenn besonders vorteilhaft bei einem in gleicher Orientierung verbleibenden hinteren Dachteil in Packstellung die Heckscheibe derart verlagert wird, daß ihre in geschlossener Stellung die Außenseite bildende Fläche nach unten weist, was etwa über einen Schwenkvorgang erreicht werden kann, kann der gesamte Bereich, in dem sich in geschlossener Stellung die Heckscheibe erstreckt, zur Vergrößerung des Kofferraums genutzt werden. Besonders effektiv läßt sich ein Verschwenken um eine dem oberen Kantenbereich der Heckscheibe zugeordnete Schwenkachse durchführen, wobei der gewonnene Raum dann besonders groß ist, wenn die Heckscheibe in geschlossener Stellung durch einen nach unten offenen, U-förmigen Rahmen eingefaßt ist, wodurch bei in gleicher Orientierung abgelegtem hinterem Dachteil eine Einschränkung des Kofferraums durch eine untere Querleiste des Rahmens verhindert ist.

Beispielsweise ist die Erfindung besonders günstig für ein sogenanntes Finnenverdeck anwendbar, bei dem in geschlossener Stellung des Daches sich zwei in Seitenansicht im wesentlichen dreiecksförmig nach hinten erstreckende und beidseits der Heckscheibe angeordnete Dachausläufer erstrecken, zwischen denen die Heckscheibe in geschlossener Stellung nahezu senkrecht gehalten ist. Während des Ablegens des Daches kann dann die Heckscheibe um etwa 90° nach vorne verschwenken und dadurch einen erheblichen Raumgewinn im Kofferraum bewirken.

Weitere Vorteile und Einzelheiten der Erfindung ergeben sich aus einem nachfolgend beschriebenen und in der Zeichnung dargestellten Ausführungsbeispiel des Gegenstandes der Erfindung.

In der Zeichnung zeigt:
- Fig. 1: eine perspektivische, schematische Ansicht eines erfindungsgemäßen Cabriolet-Fahrzeugs von schräg hinten,

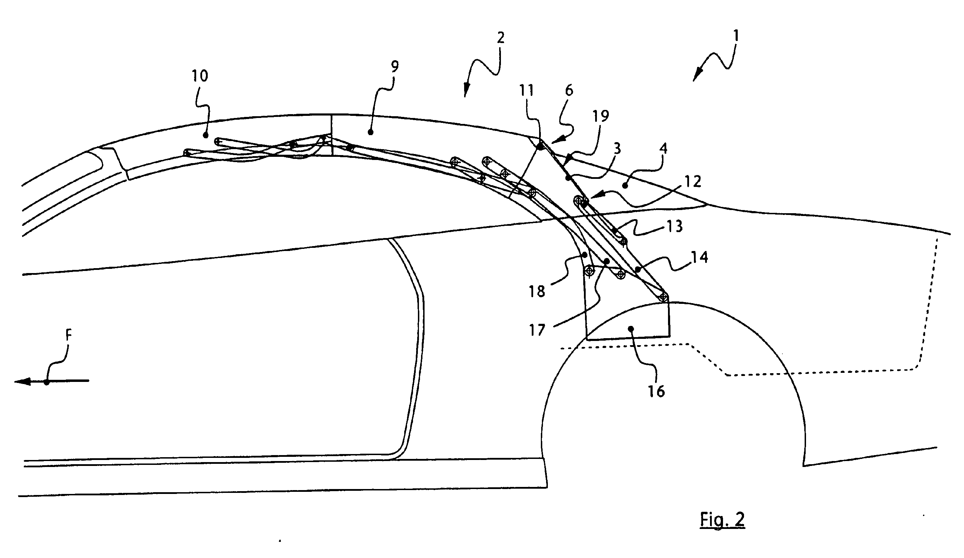

- Fig. 2: das Fahrzeug nach Fig. 1 in schematisierter Seitenansicht mit eingezeichneten Gestängeteilen in geschlossener Stellung des Daches,

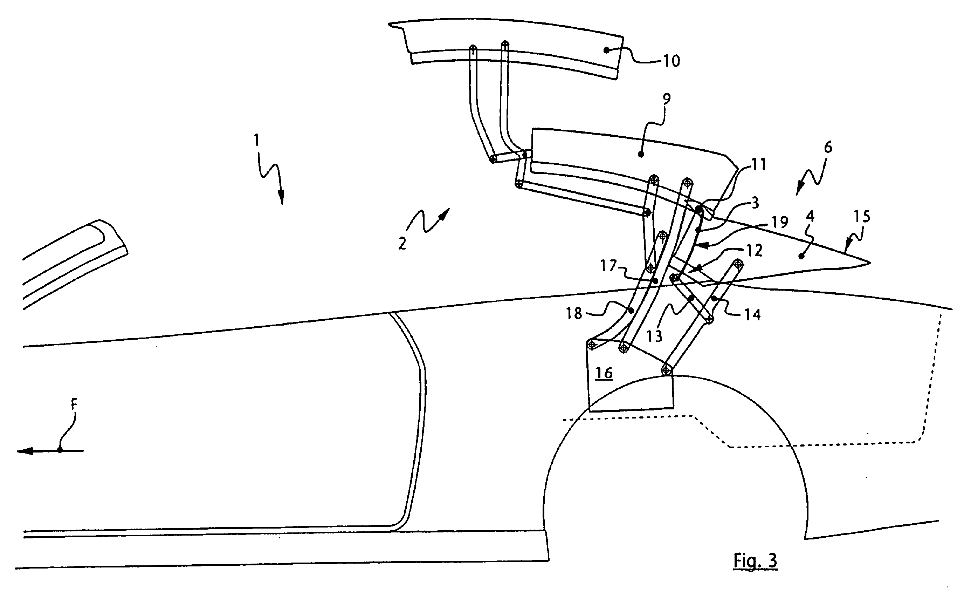

- Fig. 3: eine ähnliche Darstellung wie Fig. 2 während der ersten Phase der Dachöffnung,

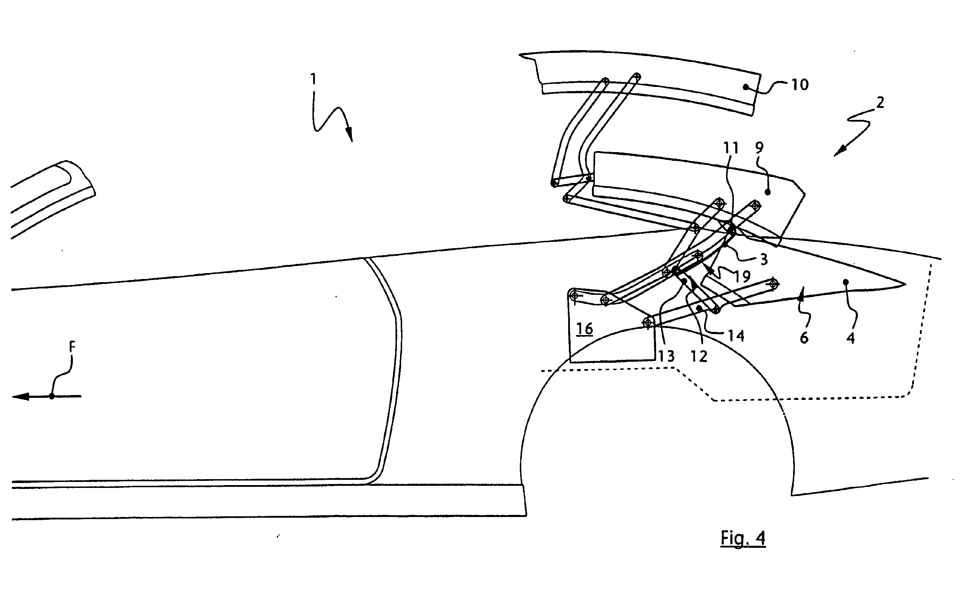

- Fig. 4: eine ähnliche Ansicht wie Fig. 3 während der fortschreitenden Dachöffnung,
- Fig. 5: eine ähnliche Ansicht wie Fig. 4 bei vollständig abgelegtem Dach.

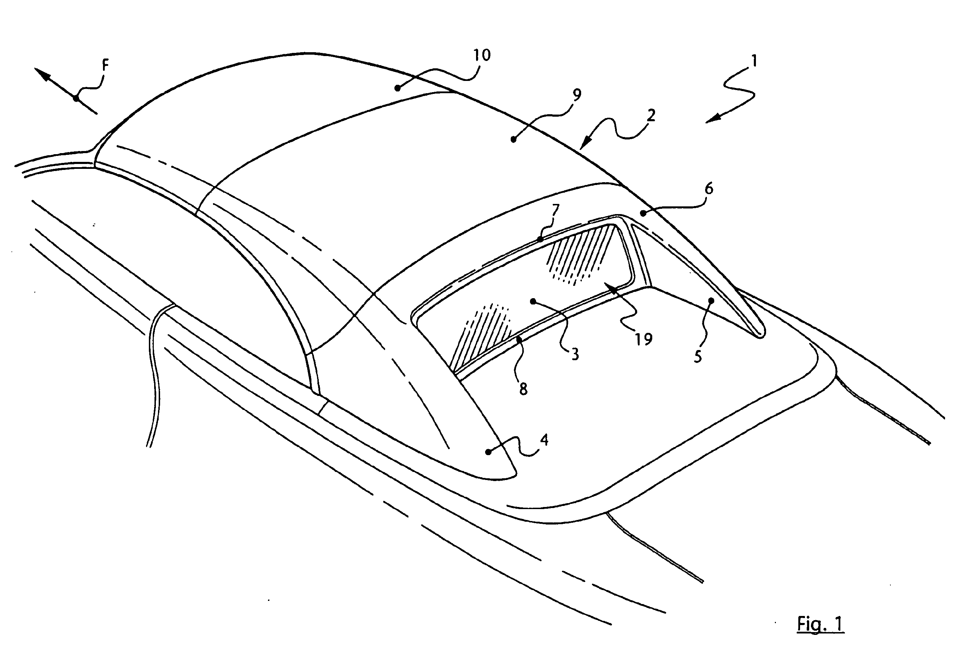

Das im Ausführungsbeispiel gezeigte Cabriolet-Fahrzeug 1 umfaßt ein als sogenanntes Finnenverdeck ausgebildetes Dach 2, das eine im geschlossenen Zustand (Fig. 1) steil oder nahezu senkrecht stehende Heckscheibe 3 und zwei sich hiervon seitlich befindende und heckwärts erstreckende Ausläufer, die als Finnen bezeichnet werden, 5 umfaßt. Die Heckscheibe 3 ist in einem im Ausführungsbeispiel starren hinteren Dachteil 6 gehalten. Dies ist allerdings nicht zwingend. Das Dachteil 6 kann auch im wesentlichen flexibel ausgebildet sein. In jedem Fall ist die Heckscheibe 3 zumindest bereichsweise von einem starren (hier U-förmigen) Rahmenbereich 7 umgeben. Die Heckscheibe 3 kann einen eigenen Rahmen 8 aufweisen, der mit ihr gegenüber dem Rahmenbereich 7 beweglich ist, oder sie kann rahmenlos in dem Rahmenbereich 7 gehalten sein.

Neben dem starren hinteren Dachteil 6 umfaßt das Dach 2 im Ausführungsbeispiel, in dem es zwei Sitzreihen eines viersitzigen Cabriolet-Fahrzeugs überspannt, zwei weitere starre Dachteile 9,10.

Es versteht sich, daß die Erfindung nicht auf ein derartiges Dach 2 beschränkt ist, sondern auch andere Verdecke, auch mit bereichsweise flexiblen Abschnitten, erfindungsgemäß ausgestaltet sein können. Ein beispielsweise zweisitziges Fahrzeug kann auch mit einem aus zwei starren Teilen bestehenden Dach ausgestattet sein.

Die Heckscheibe 3 ist an ihren oberen Randbereich um eine Schwenkachse 11, die sich quer zur Fahrtrichtung F des Cabriolet-Fahrzeugs 1 horizontal erstreckt, beweglich. An ihrem unteren Randbereich 12 ist die Heckscheibe 3 schwenkbar mit seitlichen Lenkern 13 verbunden, die ihrerseits an Gestängeteilen 14, die zur Dachbewegung dienen und sich zwischen dem Hauptlager 16 und dem hinteren Dachteil 6 erstrecken, angebunden sind.

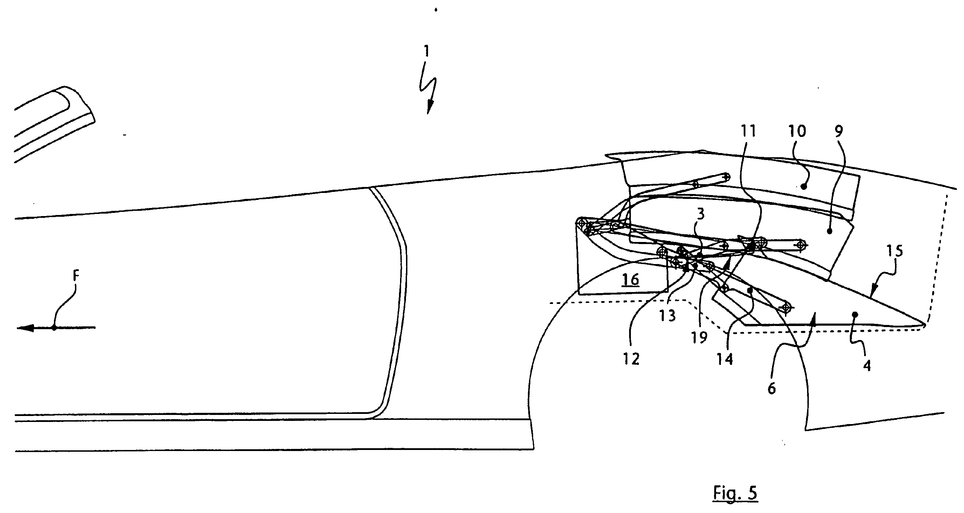

Bei Öffnung des Daches 2 wird über die am Hauptlager 16 angelenkten Gestängeteile 14 das rückwärtige Dachteil 6 heckwärts und abwärts bewegt, wobei es seine Orientierung beibehält, d. h., daß die in geschlossener Stellung des Daches 2 nach schräg aufwärts weisende Seite 15 des hinteren Dachteils 6 auch in Packstellung (Fig. 5) nach schräg aufwärts weist. Ebenso werden über die weiteren am Hauptlager 16 schwenkbar festgelegten Lenker 17,18 die weiteren Dachteile 9,10 in gleicher Orientierung und insgesamt ineinandergeschachtelt verlagert, wobei das vordere Dachteil in abgelegter Stellung als oberstes liegt. Die Heckscheibe 3 ist über ihre Halterung an der Schwenkachse 11 während des Ablegens des Daches 2 gegenüber dem hinteren Dachteil 6 relativbeweglich. Die hierfür wirkenden Lenker 13 befinden sich an beiden Fahrzeugseiten und greifen am unteren, der Schwenkachse 11 abgewandten Randbereich 12 der Heckscheibe 3 an. Sie sind entweder selbst angetrieben, etwa über Hydraulikzylinder, Elektromotore oder dergleichen Antriebsorgane, oder sie werden durch andere Gestängeteile, die angetrieben sind, zwangsweise mitbewegt. Auch eine manuelle Betätigung zum Öffnen oder Schließen des Daches 2 ist möglich. Auch dann wird durch die Zwangsführung mittels der Lenker 13 die Relativbewegung der Heckscheibe 3 beim Bewegen des Daches 2 zwangsweise bewirkt.

Über die Lenker 13 ist der untere Rand 12 der Heckscheibe mit den Lenkern 14 derart zwangsgekoppelt, daß während des Ablegens des rückwärtigen Dachteils 6 die Heckscheibe 3 aus ihrer im Rahmen 7 gehaltenen Stellung aufschwenkt, wobei der untere Randbereich 12 gegenüber dem rückwärtigen Dachteil 6 nach vorne verlagert wird und somit die Außenseite 19 der Heckscheibe 3 in eine nach unten weisende Endlage in Packstellung verbracht wird. Durch die Zwangskopplung über die Gestängeteile 13 an die dachbewegenden Gestängeteile 14 ist ein eigener Antrieb für die Bewegung der Heckscheibe 3 entbehrlich. Dieser ist allerdings alternativ auch möglich.

Bei dem im Ausführungsbeispiel gezeichneten Finnendach 2 stehen in Packstellung (Fig. 5) die seitlichen Ausläufer 4,5 im Kofferraum nach hinten vor, zwischen diesen verbleibt jedoch ein großer freier Bereich, der durch das gezeigte Umschwenken der Heckscheibe 3 nach vorne in Fahrtrichtung F erheblich erweitert wird. Damit ist es möglich, Gepäckstücke unterhalb der dann im wesentlichen horizontal liegenden Heckscheibe 3 bis hinter die vorderen oder hinteren Sitzreihen bzw. eine Spritzwand zur Abgrenzung gegenüber diesen Sitzreihen vorzuschieben. Weitere Hindernisse sind dann nicht vorhanden, so daß etwa flache, lange Gepäckstücke, etwa ein Hartschalenkoffer, trotz des abgelegten Dachs im Kofferraum gelagert werden kann.

Dadurch, daß während oder vor dem Ablegen des Daches das Verschwenken der Heckscheibe 3 stattfindet, gelangt während der Dachablage deren Unterkante 12 in keine tiefere Stellung als diejenige, die sie in Endstellung (Fig. 5) einnimmt. Dadurch kann auch bei bereits eingelegten Gepäckstücken, die den durch die Verschwenkbarkeit der Heckscheibe 3 zur Verfügung stehenden Raum nutzen, die Dachablage stattfinden, ohne daß es zu einer Kollision kommen würde.

An Stelle der Verschwenkbarkeit der Heckscheibe 3 während der Ablage des Daches 2 kann auch eine andere Relativbewegung vorgesehen sein, beispielsweise auch eine Parallelverschiebung der Heckscheibe 3. Hierfür könnten etwa im Rahmenteil 7 seitliche Führungsschienen vorgesehen sein, die selbst leicht verschwenkbar sind und in denen die seitlichen Bereiche der Heckscheibe 3 während der Bewegung des Daches 2 verlagert werden können. Auch dann ist es beispielsweise unter Beibehaltung der Orientierung des hinteren Dachteils 6 möglich, den Horizontalabstand zum Kofferraumende zu vergrößern, um somit die Einlagerung von mehr oder größeren Gepäckstücken zu ermöglichen.

## Patentansprüche

1. Cabriolet-Fahrzeug (1) mit einem im rückwärtigen Fahrzeugbereich ablegbaren Dach (2), wobei das Dach (2) eine Heckscheibe (3) umfaßt, die in geschlossener Stellung des Daches (2) zumindest bereichsweise von einem starren Rahmenbereich (7) eines rückwärtigen Dachteils (6) umgeben und zur Ablage des Daches (2) gegenüber diesem in eine Packstellung relativbeweglich ist,
**dadurch gekennzeichnet,**
**daß** zumindest der bei geschlossenem Dach (2) untere Randbereich (12) der Heckscheibe (3) in Packstellung gegenüber dem Rahmenbereich (7) aus seiner in diesem gehaltenen Stellung in Fahrtrichtung (F) nach vorne verlagert ist.

2. Cabriolet-Fahrzeug nach Anspruch 1,
**dadurch gekennzeichnet,**
**daß** der in geschlossener Stellung des Daches (2) die Heckscheibe (3) umgebende Rahmenbereich (7) in geöffneter Stellung in im wesentlichen gleicher Orientierung verbleibt und die in geschlossener Stellung des Daches (2) nach schräg aufwärts weisende Seite (15) des hinteren Dachteils (6) auch in Packstellung nach schräg aufwärts weist.

3. Cabriolet-Fahrzeug nach einem der Ansprüche 1 oder 2,
**dadurch gekennzeichnet,**
**daß** die Heckscheibe (3) gegenüber dem Rahmenbereich (7) in Packstellung in einer im wesentlichen umgekehrten Orientierung gehalten und die Außenseite (19) der Heckscheibe (3) in eine nach unten weisende Endlage verbracht ist.

4. Cabriolet-Fahrzeug nach einem der Ansprüche 1 bis 3,
**dadurch gekennzeichnet,**
**daß** die Heckscheibe (3) gegenüber dem sie umgebenden Rahmenbereich (7) schwenkbeweglich ist.

5. Cabriolet-Fahrzeug nach Anspruch 4,
**dadurch gekennzeichnet,**
**daß** die Schwenkachse (11) dem oberen Randbereich der Heckscheibe (3) zugeordnet ist.

6. Cabriolet-Fahrzeug nach einem der Ansprüche 4 oder 5,
**dadurch gekennzeichnet,**
**daß** die Schwenkbewegung der Heckscheibe (3) über ein Gestänge (13) vermittelbar ist.

7. Cabriolet-Fahrzeug nach Anspruch 6,
**dadurch gekennzeichnet,**
**daß** das Gestänge (13) durch Ablage- oder Schließbewegung des Daches (3) zwangsbewegt ist.

8. Cabriolet-Fahrzeug nach einem der Ansprüche 6 oder 7,
**dadurch gekennzeichnet,**
**daß** das Gestänge (13) an der Heckscheibe (3) an ihrem der Schwenkachse (11) abgelegenen Randbereich (12) angreift.

9. Cabriolet-Fahrzeug nach einem der Ansprüche 1 bis 8,
**dadurch gekennzeichnet,**
**daß** das Dach (2) ein Finnendach mit einer im geschlossenen Zustand steil oder nahezu senkrecht stehenden Heckscheibe (3) und zwei seitlich der Heckscheibe (3) stehenden und sich heckwärts erstreckenden Dachausläufern (4;5) ausbildet.

10. Cabriolet-Fahrzeug nach einem der Ansprüche 1 bis 9,
**dadurch gekennzeichnet,**
**daß** die Heckscheibe (3) in Packstellung in einer nahezu horizontalen Lage, in der die in geschlossener Stellung des Daches die Außenseite (19) bildende Seite der Heckscheibe (3) nach unten weist, gehalten ist.

11. Cabriolet-Fahrzeug nach einem der Ansprüche 1 bis 9,
**dadurch gekennzeichnet,**
**daß** während der Ablagebewegung des Daches (2) die Heckscheibe (3) gegenüber dem sie umgebenden Rahmenteil parallelverschieblich ist.

12. Fahrzeugdach (2), das eine Heckscheibe (3) umfaßt, die in geschlossener Stellung des Daches (2) zumindest bereichsweise von einem starren Rahmenbereich (7) eines rückwärtigen Dachteils (6) umgeben und zur Ablage des Daches gegenüber diesem in eine Packstellung relativbeweglich ist,
**dadurch gekennzeichnet,**
**daß** zumindest der bei geschlossenem Dach (2) untere Randbereich (12) der Heckscheibe (3) in Packstellung gegenüber dem Rahmenbereich (7) aus seiner in diesem gehaltenen Stellung in Richtung eines vorderen Dachbereichs (10) verlagert ist.

## Claims

1. **A cabriolet vehicle (1) with a roof (2) which is able to be stored** in the rear vehicle area, whereby the roof (2) includes a rear window (3), which, in the closed position of the roof (2), is surrounded at least in areas by a rigid frame area (7) of a rear roof part (6) and, to store the roof (2), is relatively movable into a packed position in respect of this,
**characterised in that**
at least the edge area (12), which is lower in the case of the closed roof (2), of the rear window (3) in the packed position is displaced forwards in the direction of travel (F), in respect of the frame area (7), out of its position held in this.

2. The cabriolet vehicle according to Claim 1,
**characterised in that**
the frame area (7), which, in the closed position of the roof (2), surrounds the rear window (3), remains in substantially the same orientation in the opened position and the side (15), which points transversely upwards in the closed position of the roof (2), of the rear roof part (6) also points transversely upwards in the packed position.

3. The cabriolet vehicle according to one of claims 1 or 2,
**characterised in that**
the rear window (3) is held in respect of the frame area (7) in the packed position in a substantially inverse orientation and the outer side (19) of the rear window (3) is brought into an end state pointing downwards.

4. The cabriolet vehicle according to one of claims 1 to 3,
**characterised in that**
the rear window (3) is pivotally movable In respect of the frame area (7) which surrounds it.

5. The cabriolet vehicle according to Claim 4,
**characterised in that**
the pivot axle (11) is attached to the upper edge area of the rear window (3).

6. The cabriolet vehicle according to one of claims 4 or 5,
**characterised in that**
the pivoting movement of the rear window (3) can be communicated via a rod (13).

7. The cabriolet vehicle according to Claim 6,
**characterised in that**
the rod (13) is forcibly moved by the storage or closing movement of the roof (3).

8. The cabriolet vehicle according to one of claims 6 or 7,
**characterised in that**
the rod (13) engages the rear window (3) at its edge area (12) which is remote from the pivot axle (11).

9. The cabriolet vehicle according to one of claims 1 to 8,
**characterised in that**
the roof (2) forms a fin roof with a rear window (3), which in the closed state, is situated in a steep or almost upright manner, and two roof extensions (4; 5) which are situated at the sides of the rear window (3) and which extend rearwards.

10. The cabriolet vehicle according to one of claims 1 to 9,
**characterised in that**
the rear window (3), in the packed position, is held in an almost horizontal state in which the rear window (3) side, which, in the closed position of the roof, forms the outer side (19), points downwards.

11. The cabriolet vehicle according to one of claims 1 to 9,
**characterised in that**
during the storage movement of the roof (2) the rear window (3) is able to be moved in a parallel manner in respect of the frame part which surrounds it.

12. A vehicle roof (2), which Includes a rear window (3) which, in the closed position of the roof (2), is surrounded at least in areas by a rigid frame area (7) of a rear roof part (6) and, to store the roof, is relatively movable into a packed position in respect of this
**characterised in that**
at least the edge area (12), which is lower in the case of the closed roof (2), of the rear window (3) in the packed position is displaced in the direction of a front roof area (10), in respect of the frame area (7), out of its position held in this.

## Revendications

1. Véhicule cabriolet (1) comprenant un toit (2) pouvant être rangé dans la région arrière du véhicule, le toit (2) comprenant une vitre arrière (3), qui, dans la position fermée du toit (2), est au moins partiellement entourée par une région de cadre rigide (7) d'une partie de toit arrière (6) et peut être déplacée relativement par rapport à celle-ci dans une position de rangement pour le rangement du toit (2),
**caractérisé en ce que**
lorsque le toit (2) est fermé, au moins la région de bord inférieure (12) de la vitre arrière (3) est déplacée vers l'avant dans la direction de conduite (F) dans la position de rangement par rapport à la région de cadre (7) depuis sa position maintenue dans cette dernière.

2. Véhicule cabriolet selon la revendication 1,
**caractérisé en ce que**
la région de cadre (7) entourant la vitre arrière (3) dans la position fermée du toit (2) reste dans la position ouverte dans une orientation sensiblement identique et le côté (15) de la partie de toit arrière (6) tourné obliquement vers le haut dans la position fermée du toit (2) est également tourné obliquement vers le haut dans la position rangée.

3. Véhicule cabriolet selon l'une quelconque des revendications 1 ou 2,
**caractérisé en ce que**
la vitre arrière (3) est maintenue par rapport à la région de cadre (7) dans la position rangée dans une orientation sensiblement inversée et le côté extérieur (19) de la vitre arrière (3) est amené dans une position extrême tournée vers le bas.

4. Véhicule cabriolet selon l'une quelconque des revendications 1 à 3,
**caractérisé en ce que**
la vitre arrière (3) est déplaçable par pivotement par rapport à la région de cadre (7) qui l'entoure.

5. Véhicule cabriolet selon la revendication 4,
**caractérisé en ce que**
l'axe de pivotement (11) est associé à la région de bord supérieure de la vitre arrière (3).

6. Véhicule cabriolet selon l'une quelconque des revendications 4 ou 5,
**caractérisé en ce que**
le mouvement de pivotement de la vitre arrière (3) peut être communiqué par le biais d'une tringlerie (13).

7. Véhicule cabriolet selon la revendication 6,
**caractérisé en ce que**
la tringlerie (13) est déplacée par force par le déplacement de rangement ou de fermeture du toit (3).

8. Véhicule cabriolet selon l'une quelconque des revendications 6 à 7,
**caractérisé en ce que**
la tringlerie (13) vient en prise au niveau de la vitre arrière (3) sur sa région de bord (12) éloignée de l'axe de pivotement (11).

9. Véhicule cabriolet selon l'une quelconque des revendications 1 à 8,
**caractérisé en ce que**
le toit (2) constitue un toit à ailes avec une vitre arrière (3) dressée ou pratiquement verticale dans l'état fermé, et deux éperons de toit (4 ; 5) situés latéralement à la vitre arrière (3) et s'étendant vers l'arrière.

10. Véhicule cabriolet selon l'une quelconque des revendications 1 à 9,
**caractérisé en ce que**
la vitre arrière (3) est maintenue dans la position de rangement dans une position pratiquement horizontale dans laquelle le côté de la vitre arrière (3) formant le côté extérieur (19) dans la position fermée du toit est tourné vers le bas.

11. Véhicule cabriolet selon l'une quelconque des revendications 1 à 9,
**caractérisé en ce que**
pendant le déplacement de rangement du toit (2), la vitre arrière (3) peut être déplacée parallèlement à la partie de cadre qui l'entoure.

12. Toit de véhicule (2), qui comprend une vitre arrière (3), qui, dans la position fermée du toit (2), est au moins partiellement entourée par une région de cadre rigide (7) d'une partie de toit arrière (6) et peut être déplacée relativement par rapport à celle-ci dans une position de rangement pour le rangement du toit,
**caractérisé en ce que**
lorsque le toit est fermé (2), au moins la région de bord inférieure (12) de la vitre arrière (3) est déplacée dans la direction d'une région de toit avant (10) dans la position de rangement par rapport à la région de cadre (7) depuis sa position maintenue dans cette dernière.
